# EUROPEAN PATENT SPECIFICATION

(11) **EP 3 453 577 B1**
(45) Date of publication and mention of the grant of the patent: **11.03.2020**
(21) Application number: 18192791.4
(22) Date of filing: 05.09.2018
(51) Int. Cl.: B60R 22/46, B60R 21/017

(54) **SEATBELT CONTROL DEVICE**
SICHERHEITSGURTSTEUERUNG
DISPOSITIF DE COMMANDE DE CEINTURE DE SÉCURITÉ

(30) Priority: 07.09.2017 JP 2017172469
(43) Date of publication of application: 13.03.2019
(73) Proprietor: TOYOTA JIDOSHA KABUSHIKI KAISHA, Toyota-shi, Aichi-ken, 471-8571 (JP)
(72) Inventor: NEZAKI, Takuya, Toyota-shi, Aichi-ken, 471-8571 (JP); SUGIYAMA, Motoki, Aichi-ken (JP)
(74) Representative: Cabinet Beau de Loménie

(56) References cited:
- EP-A1- 1 747 942
- DE-A1-102007 035 887
- US-A1- 2004 080 204
- US-A1- 2005 230 174

## Description

### BACKGROUND

### Technical Field

The present disclosure relates to a seatbelt control device.

### Related Art

Heretofore, motorized seatbelt devices equipped with electric retractors have been known (for example, see Japanese Patent Application Laid-Open (JP-A) No. 2001-11 4069 or EP1747942A).

However, when a motorized seatbelt device is installed at a rear seat of a vehicle, a driving circuit for driving a motor of the motorized seatbelt at the rear seat must additionally be installed, which increases costs.

### SUMMARY

In consideration of the circumstances described above, the present disclosure provides a seatbelt control device that reduces costs and facilitates installation of a motorized seatbelt device at a rear seat of a vehicle.

An aspect of the present disclosure is a seatbelt control device including: a first driving circuit that is configured to drive a motor of a motorized seat belt at a driver seat of a vehicle; a second driving circuit that is configured to drive a motor of a motorized seatbelt at a front passenger seat of the vehicle and a motor of a motorized seatbelt at a rear seat of the vehicle; and a control section that is configured to control the first driving circuit and the second driving circuit in accordance with input signals.

In the seatbelt control device according to the aspect, the driving circuit of the motor of the motorized seatbelt at the front passenger seat and the driving circuit of the motor of the motorized seatbelt at the rear seat of the vehicle are a shared circuit. Therefore, costs are reduced and the motorized seatbelt may be installed at the rear seat of the vehicle.

The aspect may further include a first switch that is configured to switch in conjunction with a buckle switch of the front passenger seat, the first switch connecting the motor at the front passenger seat and the second driving circuit; and a second switch that is configured to switch in conjunction with a buckle switch of the rear seat, the second switch connecting the motor at the rear seat and the second driving circuit.

In the structure described above, because the motor and the second driving circuit are connected via the switch that switches in conjunction with the buckle switch, an occurrence of end-locking due to the seatbelt activating in a case in which no vehicle occupant is sitting on the front passenger seat may be avoided.

In the aspect, the control section may control the first driving circuit so as to take up the seatbelt at the driver seat at a predetermined timing, and control the second driving circuit so as to take up the seatbelt at the front passenger seat and the seatbelt at the rear seat at a timing that is different from the predetermined timing.

In the structure described above, because a driver sitting on the driver seat is able to be restrained at a different timing from a vehicle occupant sitting on the front passenger seat and a vehicle occupant sitting on the rear seat, the vehicle occupants may be restrained at suitable timings.

In the aspect, the control section may control the first driving circuit so as to take up the seatbelt at the driver seat with a predetermined takeup load, and control the second driving circuit so as to take up the seatbelt at the front passenger seat and the seatbelt at the rear seat with a takeup load that is different from the predetermined takeup load.

In the structure described above, because a driver sitting on the driver seat may be restrained with a different takeup load to a vehicle occupant sitting on the front passenger seat and a vehicle occupant sitting on the rear seat, the vehicle occupants may be restrained with suitable takeup loads.

In the aspect, the control section may control the first driving circuit in accordance with at least one of a state of a driver sitting on the driver seat, a running state of the vehicle, and a driving status representing switching between autonomous driving and manual driving. The tenn "state of the driver" may represent, for example, whether or not the driver is in a low-alertness state and the like. The term "running state of the vehicle" may represent, for example, a state representing whether or not the vehicle is wandering.

In the structure described above, a sensory notification may be given to the driver alone in a case in which at least one of the state of the driver, the running state of the vehicle and the driving status representing switching between autonomous driving and manual driving satisfies a notification condition for sensory notification to the driver.

In the aspect, the control section may, in a case in which the driver sitting on the driver seat is in a low-alertness state, control the first driving circuit so as to drive the motor at the driver seat and subsequently control the second driving circuit so as to drive the motors at the front passenger seat and the rear seat.

In the structure described above, if the low-alertness state of the driver continues, a vehicle occupant on the front passenger seat or a vehicle occupant on the rear seat may be notified of the low-alertness state of the driver.

In the aspect, the control section may control the first driving circuit and the second driving circuit so as to drive the motor at the driver seat and the motors at the front passenger seat and the rear seat, in accordance with information representing a confidence level with which a collision of the vehicle is predicted. The term "information representing a confidence level with which a collision of the vehicle is predicted" may include information representing, for example, whether or not an automatic brake is operating, whether or not a sudden braking operation is being performed, whether or not a sudden steering operation is being performed, whether or not a spin of the vehicle is occurring, an obstacle being detected by a laser radar or a front camera, and the like.

In the structure described above, all of the vehicle occupants may be suitably restrained in a case in which the confidence level with which a collision of the vehicle is predicted satisfies an emergency activation condition of the seatbelts.

In the aspect, the motor of each seatbelt may be one of a retractor motor or a lift-up buckle motor.

In the structure described above, if the motor of the seatbelt is a lift-up buckle motor, a sensory notification may be suitably given to the vehicle occupant in a case in which the seatbelt is driven in order to notify the vehicle occupant, even if the seat is in a reclined state. Furthermore, when the seatbelt is driven in order to restrain the vehicle occupant, the vehicle occupant may be suitably restrained.

According to the seatbelt control device of the aspect as described above, costs may be reduced and a motorized seatbelt device may be installed at a rear seat of a vehicle.

### BRIEF DESCRIPTION OF THE DRAWINGS

Fig. 1 is a plan diagram of a vehicle in which a seatbelt control device according to an exemplary embodiment is employed.
Fig. 2 is a flowchart illustrating an example of control that is executed by a seatbelt control device according to a first exemplary embodiment.
Fig. 3 is a flowchart illustrating an example of control that is executed by the seatbelt control device according to the first exemplary embodiment.
Fig. 4 is a flowchart illustrating an example of control that is executed by the seatbelt control device according to the second exemplary embodiment.
Fig. 5 is a flowchart illustrating an example of control that is executed by the seatbelt control device according to the third exemplary embodiment.
Fig. 6 is a flowchart illustrating an example of control that is executed by the seatbelt control device according to the fourth exemplary embodiment.

### DETAILED DESCRIPTION

### = First Exemplary Embodiment =

Herebelow, a seatbelt control device 10 according to a first exemplary embodiment is described using the attached drawings. An arrow FR and an arrow RH that are illustrated in the drawings indicate a front side of a vehicle V and a right side, which is one side of a vehicle width direction. Below, where descriptions are given simply using directions to front, rear, left and right, unless particularly specified, these refer to front and rear in the vehicle front-rear direction and left and right of the vehicle (when facing forward).

### - General Structure of the Interior of the Vehicle V -

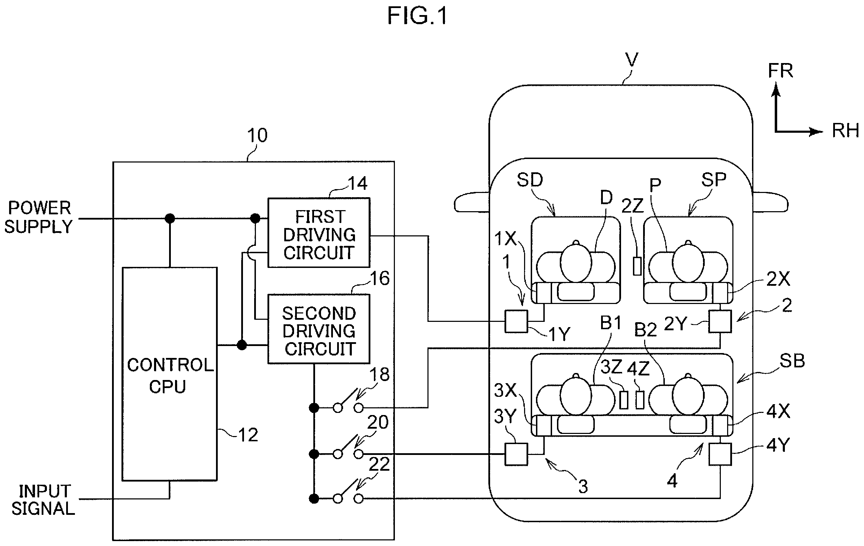

Fig. 1 is a schematic plan diagram illustrating the interior of the vehicle V in which the seatbelt control device 10 is employed. Inside the vehicle V are arranged a driver seat SD on which a driver D is to sit, a front passenger seat SP on which a vehicle occupant P is to sit, and rear seats SB on which a vehicle occupant B1 and a vehicle occupant B2 are to sit.

As illustrated in Fig. 1, a seatbelt device 1 is provided at the driver seat SD, a seatbelt device 2 is provided at the front passenger seat SP, and a seatbelt device 3 and a seatbelt device 4 are provided at the rear seats SB.

The seatbelt device 1 at the driver seat SD includes a retractor IX that takes up a seatbelt (not illustrated in the drawings), a motor 1Y that operates the retractor 1X, and a buckle (not illustrated in the drawings) with which a tongue plate (not illustrated in the drawings) attached to the seatbelt engages.

The seatbelt device 2 at the front passenger seat SP includes a retractor 2X that takes up a seatbelt, a motor 2Y that operates the retractor 2X, and a buckle switch 2Z that turns on when a tongue plate is engaged with a buckle.

The seatbelt device 3 at the rear seats SB includes a retractor 3X that takes up a left seat seatbelt, a motor 3Y that operates the retractor 3X, and a buckle switch 3Z that turns on when a left seat tongue plate is engaged with a buckle.

The seatbelt device 4 of the rear seats SB includes a retractor 4X that takes up a right seat seatbelt, a motor 4Y that operates the retractor 4X, and a buckle switch 4Z that turns on when a right seat tongue plate is engaged with a buckle.

### - The Seatbelt Control Device 10 -

As illustrated in Fig. 1, the seatbelt control device 10 includes a control CPU 12, which is an example of a control section, a first driving circuit 14, a second driving circuit 16, and three switching switches 18, 20 and 22. The seatbelt control device 10 is constituted by a microcomputer including a central processing unit (CPU), a read-only memory (ROM), a random access memory (RAM) and the like. The seatbelt control device 10 is configured as a seatbelt driving ECU, and is electronically connected to various sensors (not illustrated in the drawings). The control CPU 12, the first driving circuit 14 and the second driving circuit 16 are connected to a power supply.

The first driving circuit 14 drives the motor 1Y of the motorized seatbelt device 1 at the driver seat SD of the vehicle V. The second driving circuit 16 drives the motor 2Y of the motorized seatbelt device 2 at the front passenger seat SP of the vehicle V. The second driving circuit 16 also drives the motor 3Y of the motorized seatbelt device 3 at the left seat of the rear seats SB and the motor 4Y of the motorized seatbelt device 4 at the right seat of the rear seats SB.

The motor 2Y of the front passenger seat SP and the second driving circuit 16 are connected via the switching switch 18, which switches in conjunction with the buckle switch 2Z of the front passenger seat SP. The motor 3Y of the left seat of the rear seats SB and the second driving circuit 16 are connected via the switching switch 20, which switches in conjunction with the buckle switch 3Z of the left seat of the rear seats SB. The motor 4Y of the right seat of the rear seats SB and the second driving circuit 16 are connected via the switching switch 22, which switches in conjunction with the buckle switch 4Z of the right seat of the rear seats SB.

The control CPU 12 controls the first driving circuit 14 and the second driving circuit 16 in response to input signals from the various sensors. The control CPU 12 controls seatbelt driving for notifying vehicle occupants and seatbelt driving for restraining vehicle occupants.

For example, as driving for notifying vehicle occupants, the control CPU 12 performs control so as to drive the first driving circuit 14 in a case in which a notification condition for notifying the driver D sitting on the driver seat SD is satisfied. As an example, the control CPU 12 performs control such that tension in the seatbelt of the seatbelt device 1 is varied oscillatingly. Thus, a sensory notification is given to the driver D by the seatbelt.

Information for making a determination as to whether a notification condition for notifying the driver D is satisfied includes, for example, a state of the driver D, a running state of the vehicle V, and a driving status representing switching between autonomous driving and manual driving. The state of the driver D, the running state of the vehicle V and the driving status are successively detected by the various sensors provided in the vehicle V.

The state of the driver D is successively detected by, for example, a camera (not illustrated in the drawings) imaging the driver D. The control CPU 12 applies predetermined image processing to images captured by the camera imaging the driver D, and makes determinations as to whether the driver D is in a low-alertness state. When the driver D is in a low-alertness state, the control CPU 12 determines that the notification condition for notifying the driver D is satisfied and performs control so as to drive the first driving circuit 14. In a case in which a determination is being made as to whether the driver D is in a low-alertness state, the driver D may be determined to be in a low-alertness state if, for example, the driver D has been driving continuously for two hours or more.

The running state of the vehicle V is successively detected by various vehicle sensors (not illustrated in the drawings) such as, for example, a position sensor and the like. The control CPU 12 detects wandering of the vehicle V on the basis of information detected by the vehicle sensors. In a case in which wandering of the vehicle V is detected, the control CPU 12 determines that the notification condition for notifying the driver D is satisfied and performs control so as to drive the first driving circuit 14.

The driving status of the vehicle V is successively detected by, for example, a sensor (not illustrated in the drawings) that detects switching from autonomous driving to manual driving. The control CPU 12 detects switching from autonomous driving to manual driving on the basis of information detected by the sensor. In a case in which a switch from autonomous driving to manual driving has been implemented, the control CPU 12 determines that the notification condition for notifying the driver D is satisfied and performs control so as to drive the first driving circuit 14.

As seatbelt driving for restraining vehicle occupants, in a case in which an emergency activation condition is satisfied, the control CPU 12 controls the first driving circuit 14 and the second driving circuit 16 so as to drive the motor 1Y at the driver seat SD, the motor 2Y at the front passenger seat SP, and the motors 3Y and 4Y at the rear seats SB. As a result, vehicle occupants of the vehicle V are restrained by the seatbelts.

Information for making a determination as to whether an emergency activation condition is satisfied includes, for example, information representing a confidence level with which a collision of the vehicle is predicted. The information representing a confidence level with which a collision of the vehicle is predicted is successively detected by various sensors provided at the vehicle V. As the various sensors, a sensor (not illustrated in the drawings) provided at a vehicle stability control (VSC) system, a yaw sensor (not illustrated in the drawings), a laser radar (not illustrated in the drawings), a front camera (not illustrated in the drawings) and the like can be mentioned.

The control CPU 12 may make a determination as to whether the emergency activation condition is satisfied in accordance with the information representing a confidence level with which a collision of the vehicle is predicted that is detected by the sensors, which includes information on whether or not an automatic brake is operating, whether or not a sudden braking operation is being performed, whether or not a sudden steering operation is being performed, whether or not a spin of the vehicle V is occurring, an obstacle being detected by a laser radar or a front camera, and the like. In a case in which, for example, the automatic brake is activated, the control CPU 12 determines that the emergency activation condition is satisfied, and controls the first driving circuit 14 and the second driving circuit 16 so as to drive the motor 1Y at the driver seat SD, the motor 2Y at the front passenger seat SP, and the motors 3Y and 4Y at the rear seats SB.

Now, operation and effects of the exemplary embodiment are described.

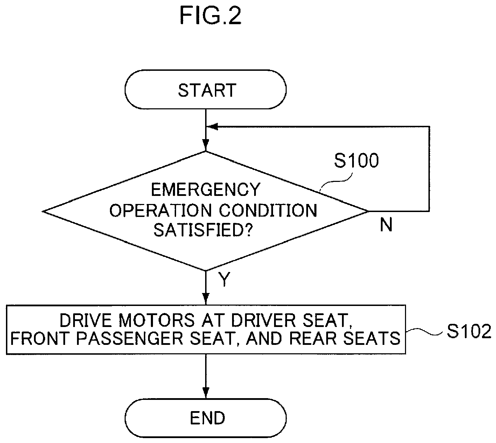

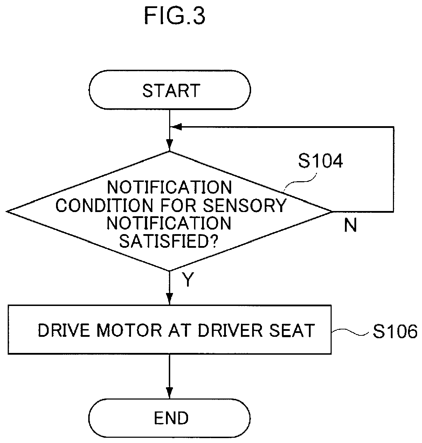

When the seatbelt control device 10 configured as described above starts successive acquisition of input signals from the various sensors, the seatbelt control device 10 executes a processing routine illustrated in Fig. 2 and a processing routine illustrated in Fig. 3. The processing routine illustrated in Fig. 2 is control processing relating to seatbelt driving for restraining vehicle occupants, and the processing routine illustrated in Fig. 3 is control processing relating to seatbelt driving for giving notification to vehicle occupants. Fig. 2 and Fig. 3 are flowcharts illustrating examples of the control executed by the seatbelt control device 10 according to the exemplary embodiment.

In step S100 illustrated in Fig. 2, the control CPU 12 acquires input signals from the various sensors and makes a determination as to whether an emergency operation condition is satisfied. In a case in which an emergency operation condition is satisfied, the control CPU 12 proceeds to step S102. In a case in which no emergency operation condition is satisfied, the control CPU 12 repeats step S100.

In step S102, the control CPU 12 controls the first driving circuit 14 and the second driving circuit 16 so as to drive the motor 1Y at the driver seat SD, the motor 2Y at the front passenger seat SP, and the motors 3Y and 4Y at the rear seats SB. Then the processing ends.

In step S104 illustrated in Fig. 3, the control CPU 12 acquires input signals from the various sensors and makes a determination as to whether a notification condition for notifying the driver D is satisfied. In a case in which a notification condition for notifying the driver D is satisfied, the control CPU 12 proceeds to step S106. In a case in which no notification condition for notifying the driver D is satisfied, the control CPU 12 repeats step S104.

In step S106, the control CPU 12 performs control so as to drive the first driving circuit 14.

As described above, the seatbelt control device according to the first exemplary embodiment includes the first driving circuit that drives a motor of a motorized seatbelt at the driver seat of the vehicle, and the second driving circuit that drives a motor of a motorized seatbelt at the front passenger seat of the vehicle and motors of motorized seatbelts at the rear seats of the vehicle. Therefore, in a case in which a motorized seatbelt is to be installed at a rear seat of the vehicle, there is no need to additionally provide a driving circuit for driving a motor at the rear seat. Therefore, costs may be kept down. The structure of the seatbelt driving ECU, which is the seatbelt control device, may also be reduced in size.

In a case in which, for example, a motor of a motorized seatbelt is operated in a state in which no vehicle occupant is seated, a lock mechanism for preventing pulling out of the seatbelt operates and end-locking occurs. Hence, when a vehicle occupant sits down thereafter and tries to put on the seatbelt, it may not be possible to pull out the seatbelt because of the end-locking. By contrast, in the first exemplary embodiment, because the motor 2Y at the front passenger seat SP is connected with the second driving circuit 16 via the switching switch 18 that switches in conjunction with the buckle switch 2Z of the front passenger seat SP, the motor 2Y is not driven in a case in which no vehicle occupant P is wearing the seatbelt at the front passenger seat SP. Therefore, an occurrence of end-locking due to the seatbelt activating when no vehicle occupant is sitting on the front passenger seat SP may be avoided. Similarly, in the first exemplary embodiment, because the motors 3Y and 4Y at the rear seats SB are connected with the second driving circuit 16 via the switching switches 20 and 22 that switch in conjunction with the buckle switches of the rear seats SB, the motors 3Y and 4Y are not driven in a case in which no vehicle occupants B1 and B2 are wearing the seatbelts at the rear seats SB. Therefore, an occurrence of end-locking due to a seatbelt activating when no vehicle occupant is sitting on a rear seat SB may be avoided.

### = Second Exemplary Embodiment =

Now, a second exemplary embodiment is described. Structures of the second exemplary embodiment are similar to the structures of the first exemplary embodiment.

In a case in which a driver D sitting on the driver seat SD is in a low-alertness state, the control CPU 12 according to the second exemplary embodiment controls the first driving circuit 14 so as to drive the motor 1Y at the driver seat SD. Then, subsequent to controlling the first driving circuit 14, the control CPU 12 controls the second driving circuit 16 so as to drive the motor 2Y at the front passenger seat SP and the motors 3Y and 4Y at the rear seats SB.

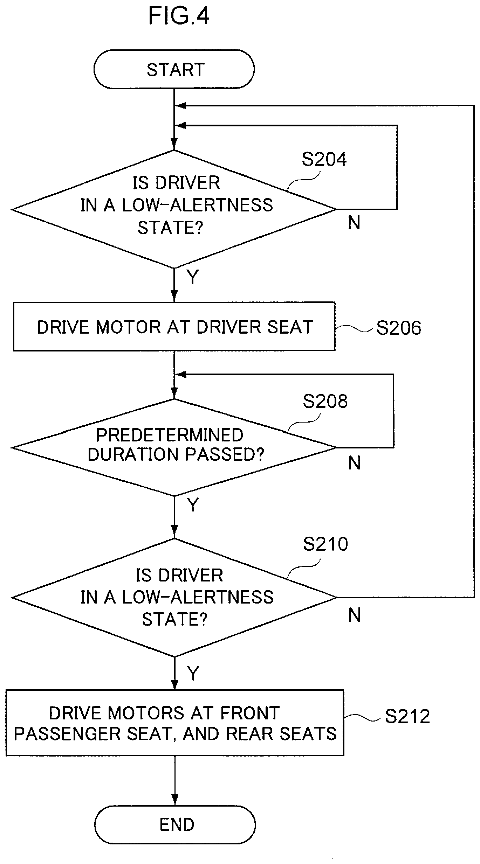

Fig. 4 is a flowchart illustrating an example of control that is executed by the seatbelt control device according to the second exemplary embodiment. Similarly to the first exemplary embodiment, the state of the driver D is successively detected by the various sensors. For example, in step S204, the control CPU 12 makes a determination as to whether the driver D is in a low-alertness state on the basis of torque information acquired by a steering sensor (not illustrated in the drawings).

In a case in which the control CPU 12 determines that the driver D is in the low-alertness state in step S204, the control CPU 12 determines that a notification condition for notifying the driver D is satisfied and, in step S206, performs control so as to drive the first driving circuit 14.

Subsequent to performing the control so as to drive the first driving circuit 14, after a predetermined duration has passed, i.e., if the determination is positive in step S208, the control CPU 12 repeats the determination as to whether the driver D is in the low-alertness state at step S210. If the control CPU 12 again determines that the driver D is in the low-alertness state at step S210, the control CPU 12 controls at step S212 the second driving circuit 16 so as to drive the motor 2Y at the front passenger seat SP and the motors 3Y and 4Y at the rear seats SB. Therefore, if the driver D continues in the low-alertness state even after the seatbelt is activated as a sensory notification to the driver D, a vehicle occupant in the front passenger seat SP or a vehicle occupant in the rear seats SB may be notified of the low-alertness state of the driver D by a seatbelt of the front passenger seat SP or the rear seats SB being activated.

Other structures and operations of the seatbelt control device according to the second exemplary embodiment are similar to the first exemplary embodiment, and are not described here.

As described above, in a case in which the state of a driver D sitting on the driver seat SD is a low-alertness state, the seatbelt control device according to the second exemplary embodiment controls the first driving circuit 14 so as to drive the motor 1Y of the driver seat SD, and subsequently controls the second driving circuit 16 so as to drive the motor 2Y of the front passenger seat SP and the motors 3Y and 4Y of the rear seats SB. Therefore, if the low-alertness state of the driver D continues, a vehicle occupant on the front passenger seat SP or a vehicle occupant on the rear seats SB may be notified of the low-alertness state of the driver D.

### = Third Exemplary Embodiment =

Now, a third exemplary embodiment is described. Structures of the third exemplary embodiment are similar to the structures of the first exemplary embodiment.

The control CPU 12 according to the third exemplary embodiment controls the first driving circuit 14 so as to activate the motorized seatbelt of the driver seat SD at a predetermined timing. The control CPU 12 also controls the second driving circuit 16 so as to activate the motorized seatbelt of the front passenger seat SP and the motorized seatbelts of the rear seats SB at a timing that is different from the predetermined timing.

When a driver D is performing manual driving, a level of tension of the driver D tends to be high. In contrast, a vehicle occupant of the front passenger seat SP and vehicle occupants of rear seats tend to have lower levels of tension than the driver. When, for example, the vehicle V has a collision, a vehicle occupant with a low level of tension tilts toward the front side of the vehicle V at an earlier timing than a vehicle occupant with a high level of tension. Therefore, as timings for taking up the seatbelts when an emergency activation condition is satisfied, it is considered preferable if a seatbelt for a vehicle occupant with a low level of tension is taken up at an earlier timing and a seatbelt for a vehicle occupant with a high level of tension is taken up at a later timing.

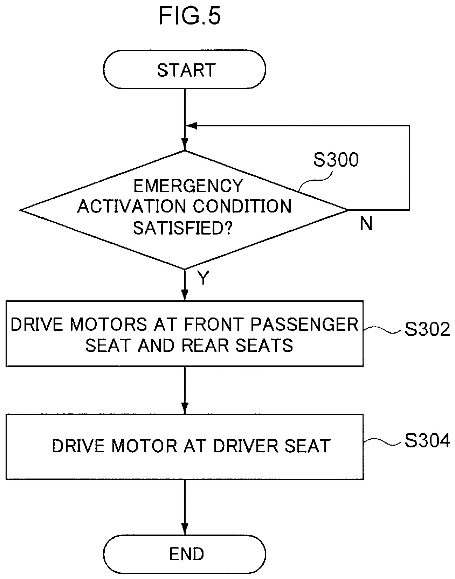

Fig. 5 is a flowchart illustrating an example of control that is executed by the seatbelt control device according to the third exemplary embodiment. In a case in which an emergency activation condition is satisfied in step S300, the control CPU 12 firstly controls the second driving circuit 16 so as to take up the motorized seatbelt of the front passenger seat SP and the motorized seatbelts of the rear seats SB in step S302. Then, the control CPU 12 controls the first driving circuit 14 so as to take up the motorized seatbelt of the driver seat SD in step S304. That is, the control CPU 12 according to the third exemplary embodiment controls the second driving circuit 16 so as to take up the motorized seatbelt of the front passenger seat SP and the motorized seatbelts of the rear seats SB at a timing earlier than a timing at which the motorized seatbelt of the driver seat SD is taken up. As a result, a driver D on the driver seat SD, a vehicle occupant on the front passenger seat SP and vehicle occupants on the rear seats SB may be restrained suitably.

Other structures and operations of the seatbelt control device according to the third exemplary embodiment are similar to the first exemplary embodiment, and are not described here.

As described above, the seatbelt control device according to the third exemplary embodiment controls the first driving circuit 14 so as to take up the motorized seatbelt of the driver seat SD at a predetermined timing. The control CPU 12 also controls the second driving circuit 16 so as to take up the motorized seatbelt of the front passenger seat SP and the motorized seatbelts of the rear seats SB at a timing different from the predetermined timing. Thus, vehicle occupants may be restrained at suitable timings.

### = Fourth Exemplary Embodiment =

Now, a fourth exemplary embodiment is described. Structures of the fourth exemplary embodiment are similar to the structures of the first exemplary embodiment.

The control CPU 12 according to the fourth exemplary embodiment controls the first driving circuit 14 so as to activate the motorized seatbelt of the driver seat SD with a predetermined takeup load. The control CPU 12 also controls the second driving circuit 16 so as to take up the motorized seatbelt of the front passenger seat SP and the motorized seatbelts of the rear seats SB with takeup loads that are different from the predetermined takeup load.

When, for example, the vehicle V has a collision, a vehicle occupant with a low level of tension tilts toward the front side of the vehicle V with a greater load than a vehicle occupant with a high level of tension. Therefore, as takeup loads of the seatbelts when an emergency activation condition is satisfied, it is considered preferable if a seatbelt for a vehicle occupant with a low level of tension is taken up with a large load and a seatbelt for a vehicle occupant with a high level of tension is taken up with a small load.

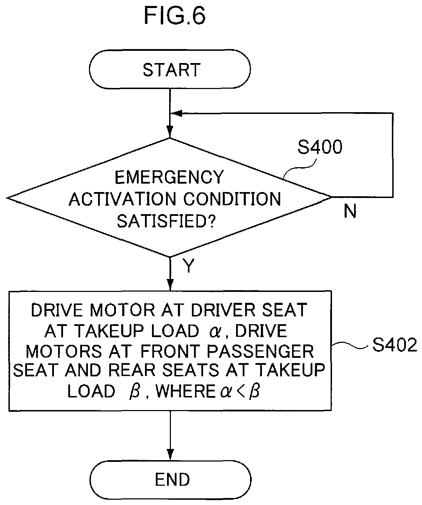

Fig. 6 is a flowchart illustrating an example of control that is executed by the seatbelt control device according to the fourth exemplary embodiment. In a case in which an emergency activation condition is satisfied in step S400, the control CPU 12 controls, in step S402, the first driving circuit 14 so as to take up the motorized seatbelt of the driver seat SD with take-up load α, and controls the second driving circuit 16 so as to take up the motorized seatbelt of the front passenger seat SP and the motorized seatbelts of the rear seats SB with take-up load β, which is larger than take-up load α. That is, the control CPU 12 according to the fourth exemplary embodiment controls the second driving circuit 16 so as to take up the motorized seatbelt of the front passenger seat SP and the motorized seatbelts of the rear seats SB with larger loads than a load with which the motorized seatbelt of the driver seat SD is taken up. As a result, a driver D on the driver seat SD, a vehicle occupant on the front passenger seat SP and vehicle occupants on the rear seats SB may be restrained suitably.

Other structures and operations of the seatbelt control device according to the fourth exemplary embodiment are similar to the first exemplary embodiment, and are not described here.

As described above, the seatbelt control device according to the fourth exemplary embodiment controls the first driving circuit 14 so as to take up the motorized seatbelt of the driver seat SD with a predetermined takeup load. The control CPU 12 also controls the second driving circuit 16 so as to take up the motorized seatbelt of the front passenger seat SP and the motorized seatbelts of the rear seats SB with takeup loads different from the predetermined takeup load. Thus, vehicle occupants may be restrained with suitable takeup loads.

The processing that is executed by the seatbelt control device 10 according to the exemplary embodiments described above is described as being software processing that is implemented by a program being executed, but the disclosure is not limited to this and the processing may be implemented in hardware. Alternatively, the processing may combine both software and hardware. Further, the program memorized in the ROM may be memorized in any of various storage media and distributed.

The present disclosure is not limited by the above embodiments. In addition to the above embodiments, it is clear that numerous modifications may be embodied within a technical scope not departing from the gist of the disclosure.

In the exemplary embodiments described above, examples are described in which the motors of the motorized seatbelts are retractor motors, but this is not limiting. For example, the motors of the motorized seat belts may be motors for raising and lowering lift-up buckles.

In a case in which a motor of a motorized seatbelt is a motor of a lift-up buckle, when the seat is in a reclined state, the seatbelt at a shoulder region of a vehicle occupant lifts up from the shoulder of the vehicle occupant. However, even when the seat is in the reclined state, the seatbelt at the buckle side of the seatbelt lifts up only a little. Therefore, in the reclined state of the seat, when the seatbelt is driven in order to give a notification to the vehicle occupant, sensory notification may be given to the vehicle occupant suitably using the motor of a lift-up buckle. Further, when the seatbelt is driven in order to restrain the vehicle occupant, the vehicle occupant may be restrained suitably. When the motor of a motorized seatbelt is the motor of a lift-up buckle, then when a sensory notification is to be given to the vehicle occupant, control may be performed so as to, for example, raise or lower the lift-up buckle. Hence, by the seatbelt being operated so as to be taken up and the seatbelt being operated so as to be pulled up, sensory notification is given to the vehicle occupant by the seatbelt.

In the exemplary embodiments described above, examples are described in which the switching switches 18, 20 and 22 are provided inside the seatbelt control device 10, but this is not limiting. Switching switches may be outside the seatbelt control device 10.

## Claims

1. A seatbelt control device (10) comprising:
a first driving circuit (14) that is configured to drive a motor (1Y) of a motorized seat belt (1) at a driver seat of a vehicle;
a second driving circuit (16) that is configured to drive a motor (2Y) of a motorized seatbelt (2) at a front passenger seat of the vehicle and a motor (3Y, 4Y) of a motorized seatbelt (3, 4) at a rear seat of the vehicle; and
a control section (12) that is configured to control the first driving circuit (14) and the second driving (16) circuit in accordance with input signals.

2. The seatbelt control device (10) according to claim 1, further comprising:
a first switch (18) that is configured to switch in conjunction with a buckle switch (2Z) of the front passenger seat, the first switch (18) connecting the motor (2Y) at the front passenger seat and the second driving circuit (16); and
a second switch (20, 22) that is configured to switch in conjunction with a buckle switch (3Z, 4Z) of the rear seat, the second switch (20, 22) connecting the motor (3Y, 4Y) at the rear seat and the second driving circuit (16).

3. The seatbelt control device (10) according to claim 1 or claim 2, wherein the control section (12) is configured to
control the first driving circuit (14) so as to take up the seatbelt (1) at the driver seat at a first timing, and
control the second driving circuit (16) so as to take up the seatbelt (2) at the front passenger seat and the seatbelt (3, 4) at the rear seat at a second timing that is different from the first timing.

4. The seatbelt control device (10) according to any one of claims 1 to 3, wherein the control section (12) is configured to
control the first driving circuit (14) so as to take up the seatbelt (1) at the driver seat with a first takeup load, and
control the second driving circuit (16) so as to take up the seatbelt (2) at the front passenger seat and the seatbelt (3, 4) at the rear seat with a second takeup load that is different from the first takeup load.

5. The seatbelt control device (10) according to claim 4, wherein the control section (12) is configured to control the first driving circuit (14) in accordance with at least one of:
a state of a driver sitting on the driver seat,
a running state of the vehicle, and
a driving status representing switching between autonomous driving and manual driving.

6. The seatbelt control device (10) according to claim 5, wherein the control section (12) is configured to, in a case in which the driver sitting on the driver seat is in a low-alertness state, control the first driving circuit (14) so as to drive the motor at the driver seat and subsequently control the second driving circuit (16) so as to drive the motors at the front passenger seat and the rear seat.

7. The seatbelt control device (10) according to any one of claims 1 to 6, wherein the control section is configured to control the first driving circuit (14) and the second driving circuit (16) so as to drive the motor (1Y) at the driver seat and the motors (2Y, 3Y, 4Y) at the front passenger seat and the rear seat, in accordance with information representing a confidence level with which a collision of the vehicle is predicted.

8. The seatbelt control device (10) according to any one of claims 1 to 7, wherein the motor (1Y, 2Y, 3Y, 4Y) of each seatbelt is one of a retractor motor or a lift-up buckle motor.

## Patentansprüche

1. Sicherheitsgurt-Steuervorrichtung (10), umfassend:
eine erste Antriebsschaltung (14), die dazu ausgestaltet ist, einen Motor (1Y) eines motorisierten Sicherheitsgurts (1) an einem Fahrersitz eines Fahrzeugs anzutreiben,
eine zweite Antriebsschaltung (16), die dazu ausgestaltet ist, einen Motor (2Y) eines motorisierten Sicherheitsgurts (2) an einem Beifahrersitz des Fahrzeugs und einen Motor (3Y, 4Y) eines motorisierten Sicherheitsgurts (3, 4) an einem Rücksitz des Fahrzeugs anzutreiben, und
eine Steuersektion (12), die dazu ausgestaltet ist, die erste Antriebsschaltung (14) und die zweite Antriebsschaltung (16) gemäß Eingangssignalen zu steuern.

2. Sicherheitsgurt-Steuervorrichtung (10) nach Anspruch 1, ferner umfassend:
einen ersten Schalter (18), der dazu ausgestaltet ist, in Verbindung mit einem Gurtschlossschalter (2Z) des Beifahrersitzes zu schalten, wobei der erste Schalter (18) den Motor (2Y) an dem Beifahrersitz und die zweite Antriebsschaltung (16) verbindet, und
einen zweiten Schalter (20, 22), der dazu ausgestaltet ist, in Verbindung mit einem Gurtschlossschalter (3Z, 4Z) des Rücksitzes zu schalten, wobei der zweite Schalter (20, 22) den Motor (3Y, 4Y) an dem Rücksitz und die zweite Antriebsschaltung (16) verbindet.

3. Sicherheitsgurt-Steuervorrichtung (10) nach Anspruch 1 oder Anspruch 2, wobei die Steuersektion (12) dazu ausgestaltet ist,
die erste Antriebsschaltung (14) derart zu steuern, dass der Sicherheitsgurt (1) an dem Fahrersitz bei einer ersten Zeitvorgabe aufgenommen wird, und
die zweite Antriebsschaltung (16) derart zu steuern, dass der Sicherheitsgurt (2) an dem Beifahrersitz und der Sicherheitsgurt (3, 4) an dem Rücksitz bei einer zweiten Zeitvorgabe aufgenommen werden, die von der ersten Zeitvorgabe verschieden ist.

4. Sicherheitsgurt-Steuervorrichtung (10) nach einem der Ansprüche 1 bis 3, wobei die Steuersektion (12) dazu ausgestaltet ist,
die erste Antriebsschaltung (14) derart zu steuern, dass der Sicherheitsgurt (1) an dem Fahrersitz mit einer ersten Aufnahmelast aufgenommen wird, und
die zweite Antriebsschaltung (16) derart zu steuern, dass der Sicherheitsgurt (2) an dem Beifahrersitz und der Sicherheitsgurt (3, 4) an dem Rücksitz mit einer zweiten Aufnahmelast aufgenommen werden, die von der ersten Aufnahmelast verschieden ist.

5. Sicherheitsgurt-Steuervorrichtung (10) nach Anspruch 4, wobei die Steuersektion (12) dazu ausgestaltet ist, die erste Antriebsschaltung (14) gemäß mindestens einem von:
einem Zustand eines Fahrers, der auf dem Fahrersitz sitzt,
einem Betriebszustand des Fahrzeugs, und
einem Fahrzustand, der ein Umschalten zwischen autonomem Fahren und manuellem Fahren darstellt,
zu steuern.

6. Sicherheitsgurt-Steuervorrichtung (10) nach Anspruch 5, wobei die Steuersektion (12) dazu ausgestaltet ist, in einem Fall, in dem sich der auf dem Fahrersitz sitzende Fahrer in einem Zustand geringer Aufmerksamkeit befindet, die erste Antriebsschaltung (14) derart zu steuern, dass der Motor an dem Fahrersitz angetrieben wird, und anschließend die zweite Antriebsschaltung (16) derart zu steuern, dass die Motoren an dem Beifahrersitz und an dem Rücksitz angetrieben werden.

7. Sicherheitsgurt-Steuervorrichtung (10) nach einem der Ansprüche 1 bis 6, wobei die Steuersektion dazu ausgestaltet ist, die erste Antriebsschaltung (14) und die zweite Antriebsschaltung (16) derart zu steuern, dass der Motor (1Y) an dem Fahrersitz und die Motoren (2Y, 3Y, 4Y) an dem Beifahrersitz und an dem Rücksitz gemäß Informationen angetrieben werden, die ein Konfidenzniveau darstellen, mit dem eine Kollision des Fahrzeugs vorhergesagt wird.

8. Sicherheitsgurt-Steuervorrichtung (10) nach einem der Ansprüche 1 bis 7, wobei der Motor (1Y, 2Y, 3Y, 4Y) von jedem Sicherheitsgurt einer von einem Aufrollmotor oder einem Aufwärtsbewegungs-Verschlussmotor ist.

## Revendications

1. Dispositif de commande de ceinture de sécurité (10) comprenant :
un premier circuit d'entraînement (14) qui est configuré pour entraîner un moteur (1Y) d'une ceinture de sécurité motorisée (1) au niveau d'un siège de conducteur d'un véhicule ;
un deuxième circuit d'entraînement (16) qui est configuré pour entraîner un moteur (2Y) d'une ceinture de sécurité motorisée (2) au niveau d'un siège de passager avant du véhicule et un moteur (3Y, 4Y) d'une ceinture de sécurité motorisée (3, 4) au niveau d'un siège arrière du véhicule ; et
une section de commande (12) qui est configurée pour commander le premier circuit d'entraînement (14) et le deuxième circuit d'entraînement (16) en fonction de signaux d'entrée.

2. Dispositif de commande de ceinture de sécurité (10) selon la revendication 1, comprenant en outre :
un premier commutateur (18) qui est configuré pour commuter en même temps qu'un commutateur de boucle (2Z) du siège de passager avant, le premier commutateur (18) connectant le moteur (2Y) au niveau du siège de passager avant et le deuxième circuit d'entraînement (16) ; et
un deuxième commutateur (20, 22) qui est configuré pour commuter en même temps qu'un commutateur de boucle (3Z, 4Z) du siège arrière, le deuxième commutateur (20, 22) connectant le moteur (3Y, 4Y) au niveau du siège arrière et le deuxième circuit d'entraînement (16).

3. Dispositif de commande de ceinture de sécurité (10) selon la revendication 1 ou la revendication 2, dans lequel la section de commande (12) est configurée pour
commander le premier circuit d'entraînement (14) de façon à tendre la ceinture de sécurité (1) au niveau du siège de conducteur dans un premier temps, et
commander le deuxième circuit d'entraînement (16) de façon à tendre la ceinture de sécurité (2) au niveau du siège de passager avant et la ceinture de sécurité (3, 4) au niveau du siège arrière dans un deuxième temps qui est différent du premier temps.

4. Dispositif de commande de ceinture de sécurité (10) selon l'une quelconque des revendications 1 à 3, dans lequel la section de commande (12) est configurée pour
commander le premier circuit d'entraînement (14) de façon à tendre la ceinture de sécurité (1) au niveau du siège de conducteur avec une première charge d'enroulement, et
commander le deuxième circuit d'entraînement (16) de façon à tendre la ceinture de sécurité (2) au niveau du siège de passager avant et la ceinture de sécurité (3, 4) au niveau du siège arrière avec une deuxième charge d'enroulement qui est différente de la première charge d'enroulement.

5. Dispositif de commande de ceinture de sécurité (10) selon la revendication 4, dans lequel la section de commande (12) est configurée pour commander le premier circuit d'entraînement (14) en fonction de au moins un de :
un état d'un conducteur assis sur le siège de conducteur,
un état de déplacement du véhicule, et
un état de conduite représentant une commutation entre une conduite autonome et une conduite manuelle.

6. Dispositif de commande de ceinture de sécurité (10) selon la revendication 5, dans lequel la section de commande (12) est configurée pour, dans un cas dans lequel le conducteur assis sur le siège de conducteur est dans un état de faible vigilance, commander le premier circuit d'entraînement (14) de façon à entraîner le moteur au niveau du siège de conducteur et commander ensuite le deuxième circuit d'entraînement (16) de façon à entraîner les moteurs au niveau du siège de passager avant et du siège arrière.

7. Dispositif de commande de ceinture de sécurité (10) selon l'une quelconque des revendications 1 à 6, dans lequel la section de commande est configurée pour commander le premier circuit d'entraînement (14) et le deuxième circuit d'entraînement (16) de façon à entraîner le moteur (1Y) au niveau du siège de conducteur et les moteurs (2Y, 3Y, 4Y) au niveau du siège de passager avant et du siège arrière, en fonction d'une information représentant un niveau de confiance avec lequel une collision du véhicule est prédite.

8. Dispositif de commande de ceinture de sécurité (10) selon l'une quelconque des revendications 1 à 7, dans lequel le moteur (1Y, 2Y, 3Y, 4Y) de chaque ceinture de sécurité est l'un d'un moteur d'enrouleur ou d'un moteur de relevage de boucle.
